# EUROPEAN PATENT SPECIFICATION

(11) **EP 0 438 187 B1**
(45) Date of publication and mention of the grant of the patent: **24.11.1993**
(21) Application number: 91200005.6
(22) Date of filing: 02.01.1991
(51) Int. Cl.: A01C 23/02

(54) **Device for injecting manure into the ground**
Vorrichtung zum Injizieren von Gülle in den Boden
Dispositif pour injecter le lisier dans le sol

(30) Priority: 19.01.1990 NL 9000144; 15.05.1990 NL 9001139
(43) Date of publication of application: 24.07.1991
(73) Proprietor: Bomers, Bernardus Johannes Josephus, NL-7152 DV Eibergen (NL)
(72) Inventor: Bomers, Bernardus Johannes Josephus, NL-7152 DV Eibergen (NL)
(74) Representative: Konings, Lucien Marie Cornelis Joseph

(56) References cited:
- CA-A- 1 112 110
- CH-A- 257 961
- FR-A- 2 261 697
- NL-A- 7 514 909
- US-A- 3 188 988
- US-A- 4 656 957

## Description

The invention relates to a device for injecting manure as indicated in the preamble of claim 1.

Such a device is known from NL-A-7514909. The problem occurs therein that the device does not properly spread the manure uniformly. The invention has for its object to provide a device that provides a good uniform spreading of the manure in the ground. The device according to the invention has the feature that the knife passes between the manure chamber wall and at least one counter-knife. Since less blockage of the device occurs the manure spreading becomes more uniform.

Prefered additional features of the device are indicated in the subclaims.

It is remarked that NL-A-7511421 discloses a device for injecting manure into the ground, in which a manure treater for making manure pieces smaller besides knives cooperating with the outlets also has additional knives provided at a great distance from the first mentioned knives. No fixed counter-knives are present. The additional knives result in straw and other long material wrapping around said additional knives, which results in blockage of the manure treater.

In the description following hereinbelow a prefered embodiment of the device according to the invention will be described with reference to a drawing, wherein:

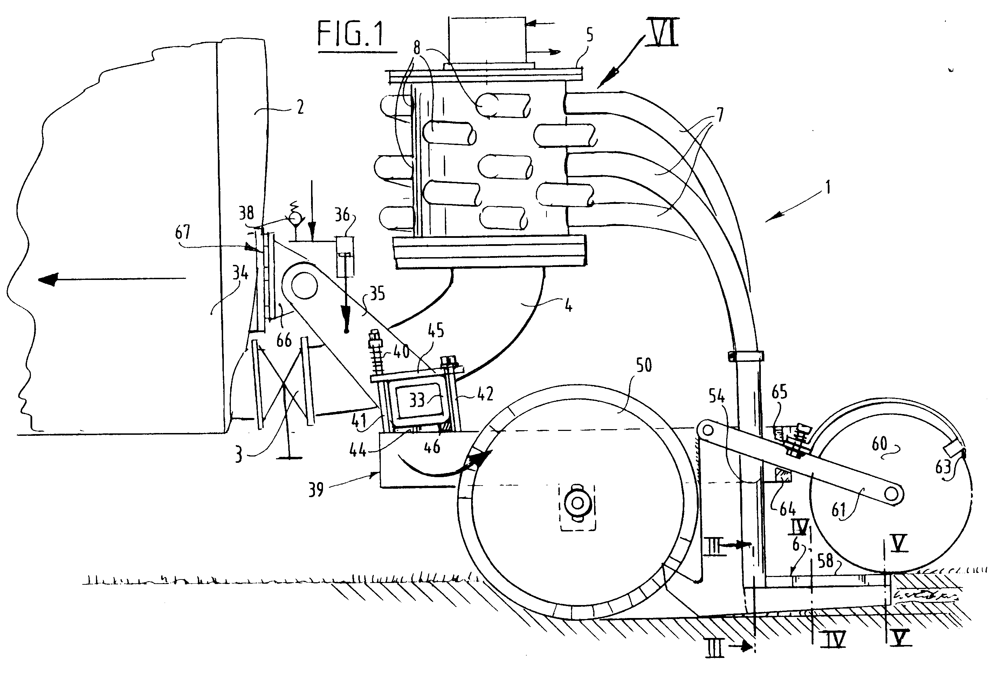

Figure 1 shows a side view of this device;
Figure 2 shows a perspective view of this device;
Figure 3 shows a section along line III-III of figure 1;
Figure 4 shows a section along line IV-IV of figure 1;
Figure 5 shows a section along line V-V of figure 1; and
Figure 6 is a perspective, partly broken away view of detail IV of figure 1.
Figures 7, 8 and 9 show respectively a side view, top view and rear view of the detail relating to a preferred variant drawn in figure 2.

The device 1 comprises a manure cutter 5 connected via a valve 3 and a feed tube 4 to a tank 2 and a plurality of, for example twenty, coulters 6 each connected via a conduit 7 to an outlet 8 of manure cutter 5.

Each coulter 6 is intended to open the ground, in particular meadow-land, and to form a covered channel 9 therein, into which is injected natural manure. This manure may optionally contain straw and/or other solid lumps which are cut in the manure cutter 5 to processable pellets and/or strands which do not result in blockages.

The manure cutter 5 comprises a cylindrical, non-rotating holder 10 having a plurality of, for instance twenty, outlets 8 distributed over the periphery and arranged in the wall 11 in a conical, outwardly converging form. This has the advantage that the outlets are easily discharging and that cutting edges 12 of smaller than 90° are formed.

The connecting conduit 7 has an inner diameter d of 25 mm (in this embodiment) and all subsequent passages have a dimension substantially equal to or greater than d.

In the holder 10 a cage-like cutting member 13 is mounted rotatably in a manure chamber by means of two rings 14, which member supports on a bearing ring 15 arranged between lower flange 16 and flange 17 of the feed tube 4. The cutting member 13 is coupled by means of an easily releasable coupling 18 to a hydraulic motor 19 which can operate in two directions through a reversible valve 20.

The motor 19 is fixedly connected to the cover 21. For the purpose of cleaning or, if necessary, clearing a cutter 5 that may be jammed, the cover 21 can be removed by loosening the screws 22, and a coupling arm 24 of the coupling 18 connected to the motor shaft 23 is then also removed therewith. During operation the coupling arm 24 engages onto protrusions 25 arranged on top of the upper ring 14.

The cutting member 13 has a plurality of, for instance four, standing cutting knives 26 distributed over the periphery which in co-action with the cutting edges 12 cut through the manure lumps and strands. Disposed non-rotatably inside the cutting member 13 is a stationary, reverse U-shaped counter cutting member 27 that is connected to the bearing ring 15. This counter cutting member 27 has in this embodiment two counter-knives 28 which co-act for cutting with the inner cutting edges 29 of cutting knives 26. In this way slices are as it were cut off from the manure feed from which cylinder-shaped slices are as it were later pressed into the outlets 8 which are then each cut off again by the inner cutting edges 30 of cutting knives 26. Thus achieved is that no over-dimensioned lumps enter the conduits 7 and the coulter 6. Only processable manure that in principle does not result in blockages is thus injected into the ground. This leads to more uniform distribution of manure over the ground surface. The counter-knives 28 each have a thickened foot 32 which becomes narrower to the top.

The device 1 has a cross beam 33 connected with swivel arms 35 to an agricultural vehicle 34, for instance a tank truck carrying the tank 2. The swivel arms are pressed down with considerable force by means of hydraulic cylinders 36 which are provided with adjusted non-return valves 38. Consoles 66 of the swivel arms 35 are joined to the agricultural vehicle 34 with height adjustable means 67. Through this height adjustment in combination with the pressure of cylinder 36 the end of coulter 6 can be held more or less deeply in the ground to control the manure flow for injection into the ground.

Each coulter 6 is fixed to a coulter frame 39 which is fixed for slight pivoting to the cross beam 33 by means of front bolts 41 and rear bolts 42 provided with springs 40 and a top flange 45. Cross beam 33 has a strip 43 which grips behind a wedge-shaped carrier 44. The coulter frame 39 can thus rotate about the strip 43 in arrow direction 46 in the case the coulter 6 unexpectedly strikes against a heavy stone or the like in order to prevent damage to device 1. A rotatable cutting disc 50 is mounted rotatably and height-adjustably on the forward end of coulter frame 39. The rear part of the cutting disc 50 penetrating into the ground is accommodated in the front piece 51 of coulter 6. This front piece 51 has a standing, inclining forward edge 52 and a rearward diverging shape which pushes open the cut through grass sod.

The conduit 7 connects with an oval bottom piece 54 onto the channel 9 of coulter 6 and standing in front thereof is a streamlined ground guide piece 55.

For forming a channel-like manure receiving space 9 the coulter 6 has a reverse U-profile-shaped channel wall 57 with sharp bottom edges 58 which run sloping upward to the rear. Standing on the channel 57 is a ridge 58 which reaches up to ground level. Rotors 60 are disposed behind the coulters 6 for upward swivelling and coupled to coulter frame 39 by means of pivot arms 61 and optionally adjustable in lengthwise direction of the pivot arms. The rotors preferably just support on the rear ends of the ridges 58. Each rotor is provided with a scraper 63 and with stops 64, 65 for bounding its swivel movement.

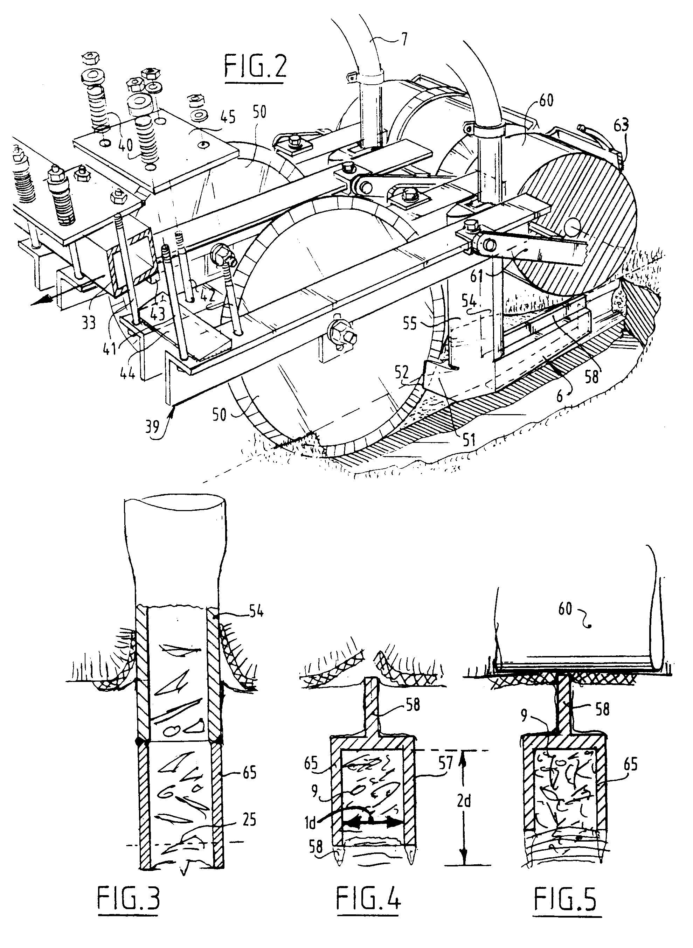

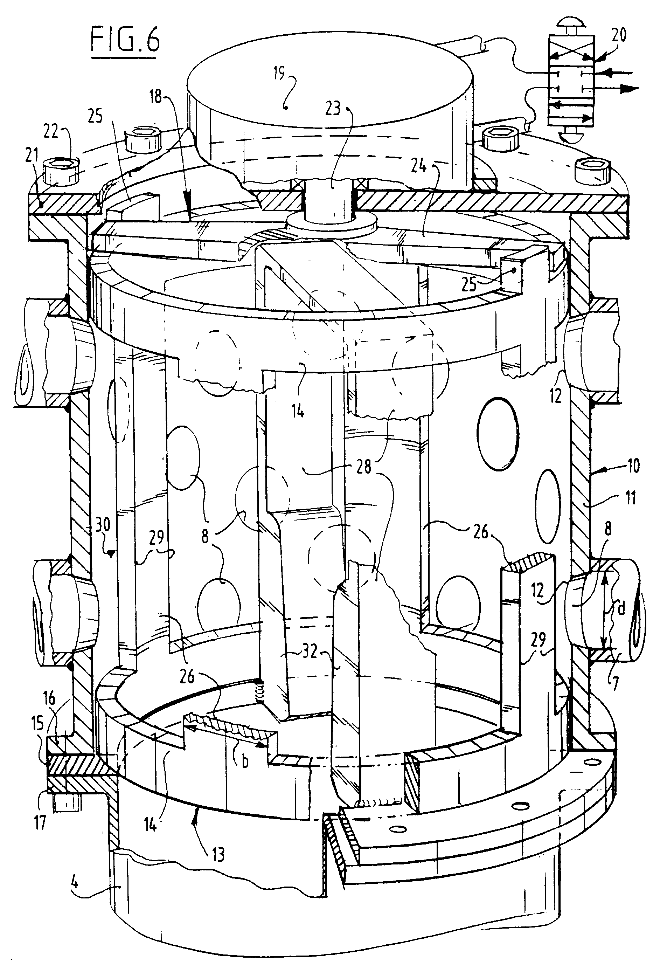

In figures 2 to 5 can be seen how the ground is cleaved open, how the manure receiving space is located in the ground and how the ground is re-closed.

The knives 26 have a breadth b equal to or greater than the breadth of each outlet 8 so that the manure flow through the conduit 7 takes place pulse-wise. This counters blockage and the pulsating action also assists the manure distribution in the ground.

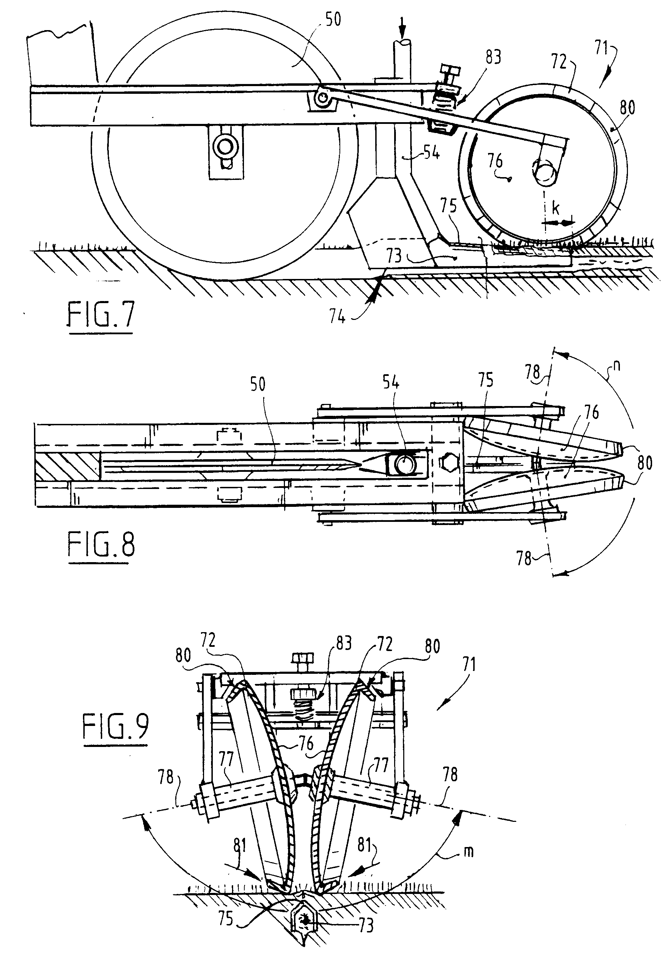

The device 71 of figures 7-9 is identical to the device 1 with the exception of the following.

Instead of a cylindrical pressure roller 60 a pressure rotor 72 is present at a position above the manure channel 73 of coulter 74 located in the ground, this at a distance k in front of the rear end thereof. The manure channel 73 has a roof-shaped upper wall 75.

The pressure rotor 72 comprises two disc-like rotor elements 76 which are mounted rotatably about shafts 77 the axes 78 whereof enclose an obtuse angle n in the horizontal plane, the point of which angle is forward oriented (see top view of figure 8). These axes 78 moreover enclose in the vertical plane an obtuse angle m the point of which is upward oriented (see rear view of figure 9).

The active edges 80 of the rotor elements 76 hereby exert a centering action according to arrows 81 on the split sods so that the sod edges are pressed shut above the channel 73. The injected manure can consequently not escape and remains in the ground.

This preferred embodiment of the device 71 operates well particularly in hard clay ground.

The rotor elements 76 are convex discs with outwardly bent edges, for instance as drawn. The downward pressure of the rotors 72 takes place using springs 83 with adjustable resiliency.

During operation the cutting discs 50 penetrate for instance 9 cm and the front parts of the coulters 74 for instance 75 mm into the ground.

## Claims

1. Device (1) for injecting manure into the ground comprising at least one coulter (6) adapted to extend into the ground and bounding a manure receiving space and which is connected via a conduit (7) to a manure cutter (5) consisting substantially of a manure chamber having arranged in the manure chamber wall at least one outlet which is provided with at least one knife (26) passing therealong, characterized in that the knife (26) passes between the manure chamber wall and at least one counter-knife (28).

2. Device (1) as claimed in claim 1, characterized in that the manure chamber has a rotational body-like manure chamber wall (11) and a plurality of knives which form part of a cage-like rotatable cutting member (13) disposed upstream and adapted to the manure chamber wall (11), on the upstream side of which member at least one counter-knife (28) and preferably a plurality of counter-knives (28) is arranged.

3. Device (1) as claimed in claim 1 or 2, characterized in that the manure chamber has distributed over its periphery a plurality of conduits (7) each connecting to a coulter and having a passage that is greater than the smallest passage of the associated manure outlet (8), wherein the knife (26) preferably has a breadth substantially corresponding with the breadth of an outlet (8) of the manure chamber.

4. Device as claimed in any of the foregoing claims, characterized in that the cutting member (13) is provided with peripheral rings with which the cutting member (13) is rotatably mounted in the manure chamber and that the cutting member (13) is preferably mounted for free rotation in the manure chamber and is coupled via a detachable coupling (18) to the output shaft (23) of a motor (19) preferably drivable in two directions.

5. Device (1) as claimed in any of the preceding claims, characterized in that the manure receiving space is a channel extending substantially in the direction of movement of the device (1), which channel is open at its bottom and is bounded by a substantially U-profile-shaped wall having dimensions practically equal to those of the outlet of the cutter (5) and of the conduit (7) extending between the cutter (5) and the channel.

6. Device (1) as claimed in claim 5, characterized in that the upper part of the U-profile-shaped wall (65) is roof-shaped.

7. Device (1) as claimed in claim 5 or 6, characterized in that a rotating cutting disc (50) cutting open the ground is present in front of the coulter (6), wherein in preference the coulter (6) at least partially accommodates the cutting disc (50).

8. Device (1) as claimed in any of the claims 5-7, characterized in that the coulter (6) has at its front a standing slitting piece and that the conduit piece (54) extending into the ground preferably has an oval diameter.

9. Device (1) as claimed in any of the claims 5-8, characterized in that the coulter (6) can be tilted out of the ground in the case of excessive ground resistance and is held in the ground with a set bias.

10. Device (1) as claimed in any of the claims 5-9, characterized in that present above the channel located in the ground is at least one pressure rotor preferably consisting of at least two rotor elements which exert a closing action on split open sods, and that the rotor elements preferably rotate about axes which mutually enclose an angle.

## Patentansprüche

1. Vorrichtung (1) zum Injizieren von Gülle in den Boden mit mindestens einem Pflugmesser (6), das sich in den Boden erstreckt und einen Gülle-Aufnahmeraum bildet, und durch eine Leitung (7) mit einer Gülleschneideeinrichtung (5) verbunden ist, die im wesentlichen aus einer Güllekammer besteht, welche mindestens einen in der Güllekammerwand angeordneten Auslaß hat, der mit mindestens einem daran entlang laufenden Messer (26) versehen ist, dadurch gekennzeichnet, daß das Messer (26) zwischen der Güllekammerwand und mindestens einem Gegenmesser (28) verläuft.

2. Vorrichtung (1) nach Anspruch 1, dadurch gekennzeichnet, daß die Güllekammer eine rotationskörperartige Güllekammerwand (11) und mehrere Messer hat, die einen Teil eines käfigartigen, rotierbaren Schneideelements (13) bilden, das stromaufwärts angeordnet und der Güllekammerwand (11) angepaßt ist, wobei auf der stromaufwärtsliegenden Seite des Elements mindestens ein Gegenmesser (28) und vorzugsweise mehrere Gegenmesser (28) angeordnet sind.

3. Vorrichtung (1) nach einem der Ansprüche 1 oder 2, dadurch gekennzeichnet, daß die Güllekammer über ihrem Umfang verteilt mehrere Leitungen (7) hat, von denen jede mit einem Pflugmesser verbunden ist und einen Durchlaß hat, der größer als der kleinste Durchlaß des verbundenen Gülleauslasses (8) ist, wobei das Messer (26) vorzugsweise eine im wesentlichen mit der Breite des Auslasses (8) der Güllekammer korrespondierende Breite hat.

4. Vorrichtung nach wenigstens einem der vorangehenden Ansprüche, dadurch gekennzeichnet, daß das Schneideelement (13) mit Umfangsringen versehen ist, mit denen das Schneideelement (13) drehbar in der Güllekammer befestigt ist, und daß das Schneideelement (13) vorzugsweise zur freien Rotation in der Güllekammer befestigt ist und durch eine lösbare Kupplung (18) mit der Kraftabgabewelle (23) eine vorzugsweise in zwei Richtungen antreibbaren Motors (19) gekoppelt ist.

5. Vorrichtung (1) nach wenigstens einem der vorgenannten Ansprüche, dadurch gekennzeichnet, daß der Gülleaufnahmeraum aus einem Kanal besteht, der sich im wesentlichen in Bewegungsrichtung der Vorrichtung (1) erstreckt, wobei der Kanal an seiner Sohle offen ist und durch ein im wesentlichen U-Profil-förmige Wand (65) begrenzt wird, die praktisch die gleichen Abmessungen wie der Auslaß der Schneideeinrichtungen (5) und die Leitung (7) hat, die sich zwischen der Schneideeinrichtung (5) und dem Kanal erstreckt.

6. Vorrichtung (1) nach Anspruch 5, dadurch gekennzeichnet, daß der obere Teil der U-förmigen Wand (67) dachförmig ist.

7. Vorrichtung (1) nach Anspruch 5 oder 6, dadurch gekennzeichnet, daß eine rotierende, den Boden aufschlitzende Schneidescheibe (50) vor dem Pflugmesser (6) vorgesehen ist, wobei vorzugsweise das Pflugmesser (6) zumindest teilweise die Schneidescheibe (50) aufnimmt.

8. Vorrichtung (1) nach wenigstens einem der Ansprüche 5-7, dadurch gekennzeichnet, daß das Pflugmesser (6) an seiner Vorderseite ein stehendes Schlitzelement hat, und daß das in dem Boden verlaufende Leitungsstück (54) vorzugsweise einen ovalen Durchmesser hat.

9. Vorrichtung (1) nach wenigstens einem der Ansprüch 5-8, dadurch gekennzeichnet, daß das Pflugmesser (6) bei exzessivem Bodenwiderstand aus dem Boden herausklappbar ist und im Boden mit einer vorgegegebenen Vorspannung gehalten wird.

10. Vorrichtung (1) nach wenigstens einem der Ansprüche 5-9, dadurch gekennzeichnet, daß über dem im Boden befindlichen Kanal mindestens ein Druckrotor vorhanden ist, der vorzugsweise aus mindestens zwei Rotorelementen besteht, welche eine Schließwirkung auf die aufgeschlitzten Soden ausüben, und daß die Rotorelemente vorzugsweise um Achsen rotieren, die gemeinsam einen Winkel einschließen.

## Revendications

1. Dispositif (1) pour injecter du fumier dans le sol comprenant au moins un coutre (6) adapté pour pénétrer dans le sol et délimitant un espace de réception de fumier et qui est raccordé par l'intermédiaire d'un conduit (7) à un tronçonneur (5) de fumier comprenant substantiellement une chambre de fumier comportant, agencée dans la paroi de la chambre de fumier, au moins une sortie qui est munie d'au moins un couteau (26) la traversant, caractérisé en ce que le couteau (26) s'étend entre la paroi de chambre de fumier et au moins un contre-couteau (28).

2. Dispositif (1) selon la revendication 1, caractérisé en ce que la chambre de fumier comporte une paroi (11) de chambre de fumier en forme de corps rotatif et une pluralité de couteaux qui forment part d'un organe coupant rotatif (13) en forme de cage disposé en amont et adapté à la paroi (11) de chambre de fumier, au moins un contre couteau (28) et de préférence une pluralité de contre couteaux (28) étant agencés dans le côté amont dudit organe.

3. Dispositif (1) selon la revendication 1 ou 2, caractérisé en ce que la chambre de fumier comporte, répartis sur sa périphérie, une pluralité de conduits (7) chacun raccordé à un coutre et comportant un passage qui est plus grand que le plus petit passage de la sortie (8) de fumier associée, dans lequel le couteau (26) a de préférence une largeur correspondant sensiblement à la largeur d'une sortie (8) de la chambre de fumier.

4. Dispositif selon l'une quelconque des revendications précédentes, caractérisé en ce que l'organe (13) coupant est muni d'anneaux périphériques avec lesquels l'organe (13) coupant est monté rotatif dans la chambre de fumier et en ce que l'organe (13) coupant est monté de préférence libre en rotation dans la chambre de fumier et est couplé par l'intermédiaire d'un accouplement (18) démontable à l'arbre (23) de sortie d'un moteur (19) qui peut être actionné de préférence dans deux directions.

5. Dispositif (1) selon l'une quelconque des revendications précédentes, caractérisé en ce que l'espace de réception de fumier est un canal s'étendant sensiblement dans la direction du mouvement du dispositif (1), le canal est ouvert à sa partie basse et est délimité par une paroi ayant sensiblement une forme profilée en U et des dimensions pratiquement égales à celles de la sortie du tronçonneur (5) et du conduit (7) s'étendant entre le tronçonneur (5) et le canal.

6. Dispositif (1) selon la revendication 5, caractérisé en ce que la partie supérieure de la paroi ayant une forme profilée en U (65) a une forme de toit.

7. Dispositif (1) selon la revendication 5 ou 6, caractérisé en ce que un disque coupant rotatif (50) coupant en l'ouvrant le sol est présent en face du coutre (6), dans lequel, de préférence, le coutre (6) loge au moins partiellement le disque coupant (50).

8. Dispositif (1) selon l'une quelconque des revendications 5 à 7, caractérisé en ce que le coutre (6) comporte sur son devant une pièce à fendre dressée et en ce que la pièce de conduit (54) s'étendant dans le sol comporte de préférence un diamètre ovale.

9. Dispositif (1) selon l'une quelconque des revendications 5 à 8, caractérisé en ce que le coutre (6) peut être basculé hors du sol dans le cas d'une résistance du sol excessive et est maintenu dans le sol avec une inclinaison déterminée.

10. Dispositif (1) selon l'une quelconque des revendications 5 à 9, caractérisé en ce qu'au-dessus du canal placé dans le sol, il y a au moins un rouleau de pression comprenant de préférence au moins deux éléments de rouleau qui exercent' une action de fermeture sur des mottes de gazon formant une fente ouverte, et en ce que les éléments de rouleau tournent de préférence autour d'axes qui forment mutuellement un angle.
